# EUROPEAN PATENT SPECIFICATION

(11) **EP 1 889 813 B1**
(45) Date of publication and mention of the grant of the patent: **17.09.2014**
(21) Application number: 06756945.9
(22) Date of filing: 02.06.2006
(51) Int. Cl.: C02F 1/46

(54) **METHOD FOR ADJUSTING PH OF LIQUID AND PH ADJUSTOR**
VERFAHREN ZUR EINSTELLUNG DES PH-WERTS VON FLÜSSIGKEIT UND PH-EINSTELLUNGSVORRICHTUNG
PROCÉDÉ POUR AJUSTER LE PH D'UN LIQUIDE ET AJUSTEUR DE PH

(30) Priority: 08.06.2005 JP 2005168711; 16.01.2006 JP 2006007945
(43) Date of publication of application: 20.02.2008
(73) Proprietor: TANAH PROCESS LTD., Osaka-shi, Osaka, 5450035 (JP)
(72) Inventor: TANAHASHI, Masakazu, c/o TANAH PROCESS LTD., Osaka-shi, Osaka 5450035 (JP); TANAHASHI, Seiji, c/o TANAH PROCESS LTD., Osaka-shi, Osaka 5450035 (JP)
(74) Representative: Hart-Davis, Jason
(86) International application number: PCT/JP2006/311124
(87) International publication number: WO 2006/132160

(56) References cited:
- JP-A- 04 231 488
- JP-A- 07 299 457
- JP-A- 2001 000 828
- JP-A- 2001 129 553

## Description

The present invention relates to a method for adjusting pH of a liquid and a pH adjuster.

Conventionally, various methods for adjusting the pH of a liquid have been proposed. For example, a method has been proposed in which two electrodes are provided with an ion-permeable membrane interposed therebetween, and salt water is electrolyzed, so that acid water and alkaline water are prepared (JP 7(1995)-299457 A).

Furthermore, an apparatus capable of adjusting the pH without using any permeable membrane also has been proposed (JP 4(1992)-284889 A and JP 8(1996)-19781 A). In these apparatuses, a plurality of plate electrodes are provided at a narrow spacing, and water flows therebetween as a laminar flow. The water that flows between the electrodes is electrolyzed to form a laminar flow of alkaline water and a laminar flow of acid water. They are taken out separately, so that alkaline water and acid water are obtained.

In these conventional apparatuses, an oxygen gas and hydrogen ion generating reaction occurring at an anode and a hydrogen gas and hydroxide ion generating reaction occurring at a cathode are carried out simultaneously. Accordingly, in these conventional apparatuses, electrodes covered with, for example, platinum were used for both the anode and the cathode.

However, in the conventional method in which a permeable membrane is used, there are problems in that, for example, the solution whose pH has been adjusted has a high salt concentration and an apparatus tends to be corroded.

JP 2001129553 (A) teaches an electrode wherein a carbon rod coated with porous conductive activated carbon is used in electrolysis to lower the pH of a treated liquid.

JP 04 (1992) 231488 shows an apparatus for treating the liquid by an electrochemical ion exchange having a flow passage, a cation response ion exchange electrode arranged in parallel with an anion response ion exchange electrode within this flow passages and counter electrodes arranged therebetween to adjust the pH of a treated liquid by independently adjusting the currents to the two ion exchange electrodes.

The invention is defined in the claims

With consideration given to the situation as described above, the present invention is intended to provide a novel pH adjustment method that allows the pH of a solution to be adjusted using a simple apparatus, and to provide a pH adjuster.

The method of the present invention for adjusting pH of a liquid is defined in claim 1 and includes:
(I) a step of applying voltage between an ion-adsorbing electrode (E1) containing an electrically conductive material (C1) that contains activated carbon capable of adsorbing an ion and a counter electrode, in an aqueous solution (A) containing at least one type of ions (L) other than a hydrogen ion and a hydroxide ion, to allow the electrically conductive material (C1) to adsorb at least a part of the ions (L), and
(II) a step of applying voltage between the ion-adsorbing electrode (E1) and the counter electrode in the liquid containing water to allow the ions (L) adsorbed by the activated carbon (C1) to be released into the liquid and to allow a hydrogen ion or a hydroxide ion to be generated at the counter electrode, resulting in changing the pH of the liquid and
wherein the counter electrode is a metallic electrode or a graphite electrode

The apparatus of the present invention for adjusting pH of a liquid is defined in claim 5 and includes
a container;
an ion-adsorbing electrode (E1) containing an electrically conductive material (C1) that contains activated carbon and that is capable of adsorbing an ion;
a counter electrode,
a voltage applying means, and
a controller,
wherein the counter electrode (13, 14) is a metallic electrode or a graphite electrode and
the controller includes an arithmetic processing unit and a memory unit, and
wherein, in the memory unit is recorded:
- a program for carrying out each step of the method of the invention and
- a target pH value.

Preferred embodiments of the method and apparatus of the invention are defined in claims 2-4 and 6 respectively.

According to the method of claim 1, the pH of a liquid can be adjusted easily and it also is possible to prepare an aqueous acid solution alone or an aqueous alkaline solution alone. Furthermore, in an example of the present invention, it also is possible to prepare an aqueous acid solution and an aqueous alkaline solution at the same time. Furthermore, the methods of the present invention allow the pH to be changed with a small amount of electricity.

In the method of the present invention, it is possible to produce an aqueous alkaline solution with a pH of 8 to 12 and an aqueous acid solution with a pH of 6 to 2 from water containing ions in the same range as tap water, without adding salt.

### Brief Description of Drawings

FIGs. 1A and 1B are diagrams that schematically show an example of the above mentioned methods for adjusting the pH of a solution.
FIGs. 2A and 2B are diagrams that schematically show another example of the above mentioned methods for adjusting the pH of a solution.
FIG. 3 is a diagram that schematically shows a further example of the above mentioned methods for adjusting the pH of a solution.
FIGs. 4A, 4B, and 4C are diagrams that schematically show still another example of the above mentioned methods for adjusting the pH of a solution.
FIGs. 5A, 5B, and 5C are diagrams that schematically show yet another example of the above mentioned methods for adjusting the pH of a solution.
FIG. 6 is a diagram that schematically shows a further example of the above mentioned methods for adjusting the pH of a solution.
FIG. 7 is a diagram that schematically shows another example of the above mentioned methods for adjusting the pH of a solution.
FIG. 8 is a diagram that schematically shows still another example of the above mentioned methods for adjusting the pH of a solution.
FIGs. 9A and 9B are diagrams that schematically show the configuration of an electrode used in examples.
FIG. 10 is a diagram that schematically shows the configuration of another electrode used in examples.

### Description of Embodiments

Hereinafter, embodiments are described. In the following description, the embodiments are explained using examples. When drawings are used for the description, identical parts may be indicated with identical numerals and symbols and the same description is not repeated in some cases. In the formulae expressing the electrolyses indicated in the following drawings, chemical equivalents are not taken into consideration to make the drawings clearly understandable.

### <First method for adjusting pH>

ApH adjustment method is a method for adjusting the pH of a liquid. This method includes step (i) and step (ii). In step (i), in an aqueous solution (A) containing at least one type of ions (L) other than hydrogen ions and hydroxide ions, voltage is applied between an ion-adsorbing electrode (E1) containing an electrically conductive material (C1) capable of adsorbing ions and an ion-adsorbing electrode (E2) containing an electrically conductive material (C2) capable of adsorbing ions so that the ion-adsorbing electrode (E1) serves as an anode (so that the ion-adsorbing electrode (E2) serves as a cathode). This allows the electrically conductive material (C1) to adsorb anions contained in the aqueous solution (A) and allows the electrically conductive material (C2) to adsorb cations contained in the aqueous solution (A). Step (i) is carried out, with both the ion-adsorbing electrodes (E1) and (E2) being immersed in the aqueous solution (A).

In step (ii), in a liquid containing water (hereinafter also referred to as an "aqueous liquid"), voltage is applied between either the ion-adsorbing electrode (E1) or the ion-adsorbing electrode (E2) and a counter electrode, so that the pH of the aqueous liquid is changed. Step (ii) is carried out, with both the two electrodes to which voltage is applied being immersed in the aqueous liquid. In step (ii), voltage is applied so that water electrolysis occurs at the counter electrode.

According to this method, it is possible arbitrarily to prepare an acid or alkaline solution, with two ion-adsorbing electrodes being placed in the same solution without separating them from each other after they are allowed to adsorb anions and cations. Therefore, according to this method, a permeable membrane such as an ion-exchange membrane is not necessary.

In the above-mentioned pH adjustment method, the voltage can be applied by a constant voltage process or can be applied by a constant current process. The use of the constant current process allows the pH to be controlled by the length of the treatment time. In this case, it is preferable that the voltage to be applied herein be not higher than a voltage causing a potential that allows water electrolysis to occur slightly at the ion-adsorbing electrode. Furthermore, generally, the voltage to be applied is a DC voltage and the current that flows thereby is direct current. However, pulse voltage and pulse current also can be employed and a step of applying AC voltage or alternating current can be included.

When water electrolysis is allowed to occur at the counter electrode, it is necessary for the counter electrode to have a potential that allows water electrolysis to occur. Furthermore, with respect to the voltage to be applied between the counter electrode and the ion-adsorbing electrode, it is necessary to give consideration to the IR drop that is caused by the solution resistance between the electrodes. Accordingly, in order to achieve a quick treatment, it is preferable that the voltage to be applied between the counter electrode and the ion-adsorbing electrode be higher than 2V

Generation of gas at the ion-adsorbing electrode tends to occur when the electrically conductive material (such as activated carbon) of the ion-adsorbing electrode has a high resistance. A high resistance of the electrically conductive material results in a larger IR drop and thereby the potential of the portion to which ions have adhered may reach a potential that causes water electrolysis, resulting in lower current efficiency. In this case, a decrease in current density results in less polarization to allow the treatment to be carried out normally but results in a longer treatment time. In order to solve this problem, it is preferable that a collector be disposed suitably to prevent any portions of the ion-adsorbing electrodes from having a resistance higher than that of the liquid present between the electrodes.

It is preferable that the internal resistance of the ion-adsorbing electrode be as low as possible. Desirably, at least any portions of the ion-adsorbing electrode are prevented from having higher internal resistance than the resistance of the liquid present between the ion-adsorbing electrode and the counter electrode. The use of such electrodes can reduce the difference in polarization at the activated carbon surface even if the current density is increased. This results in fewer regions whose potential partly reaches the decomposition potential of water, and thus the current efficiency can be improved.

The ion-adsorbing electrode is an electrode that can adsorb and release ions reversibly. For example, an electrode that allows an electric double layer to be formed on the surface thereof by adsorbing ions in a solution can be used for the ion-adsorbing electrode. This electric double layer is composed of electric charges present at the surface of the electrically conductive material (C1 or C2) and ions attracted by the surface electric charges. The ions composing the electric double layer have electric charges with an opposite sign to that of the surface electric charges of the electrically conductive material that has adsorbed the ions. It is considered that, for instance, anions are adsorbed when the surface electric charge is a positive electric charge, while cations are adsorbed when the surface electric charge is a negative electric charge.

The electrically conductive materials (C1 and C2) capable of adsorbing ions that are used herein are those with large specific surface areas. Activated carbon is used due to the large specific surface area thereof. For instance, the first and second ion-adsorbing electrodes each can include an electrically conductive sheet formed by aggregating granular activated carbon or an electrically conductive sheet formed by aggregating granular activated carbon and electrically conductive carbon. They also can include activated carbon fiber cloth. Furthermore, they also can include an activated carbon block that can be obtained by compacting activated carbon particles. The specific surface area of the electrically conductive material with a large specific surface area may be, for example, in the range of 1500 m²/g to 2500 m²/g. Examples of the activated carbon fiber cloth include activated carbon fiber clothes manufactured by Nippon Kynol Inc (for example, Article Nos. ACC-5092-15, ACC-5092-20, and ACC-5092-25).

The electrically conductive materials (C1 and C2) can be porous electrically conductive materials. Furthermore, materials that are used for electrodes of flow through capacitors also can be used for the electrically conductive materials (C1 and C2). The electrically conductive materials (C1 and C2) include porous, activated carbon. The electrically conductive materials (C1 and C2) each may have a specific surface area of at least 900 m²/g. The upper limit of the specific surface area is not particularly limited, and may be, for example, 2500 m²/g or lower. It also is possible to use electrically conductive materials with smaller specific surface areas. For example, it also is possible to use an electrically conductive material with a specific surface area of 300 m²/g or larger. In this specification, the term "specific surface area" denotes a value measured by the BET method using nitrogen gas.

By using activated carbon, a low and uniform solution resistance can be obtained by forming the electrode into the shape of a plate. For instance, a plate-shaped electrode can be formed by fixing an electrically conductive material containing granular activated carbon onto collector metal foil using a binding agent. The electrically conductive material may contain electrically conductive carbon such as acetylene black. When an electrode is to be formed using an activated carbon fiber cloth formed of activated carbon fibers, an electrode can be obtained by merely attaching a thin wiring thereto. Since this electrode allows ions contained in a solution to pass therethrough easily, the ion concentration and pH of the solution can be homogenized. Accordingly, the use of this electrode makes it possible to improve the speed of producing an aqueous acid solution or an aqueous alkaline solution.

When an electrically conductive sheet (for instance, a sheet containing activated carbon) has a high resistance, the sheet may have a wiring for collecting charges, with the wiring being formed thereon. The wiring to be used herein can be, for example, a metallic wiring. Examples thereof include a wiring formed of a valve metal that is used in an electrolytic capacitor, a wiring formed of a precious metal, or a wiring formed of a valve metal coated with, for example, a precious metal. Examples of the metal composing the wiring include at least one selected from the group consisting of Al, Ti, Ta and Nb. Examples of the metal with which the metal composing the wiring is coated include at least one metal (including an alloy) selected from the group consisting of Au, Pt, Pd and Rh.

An electrode that allows hydrogen gas or oxygen gas to be generated easily in water electrolysis is used for the counter electrode. For example, an electrode having Pt at the surface thereof is used. Specifically, an electrode formed of a metal whose surface is coated with Pt, for instance, an electrode formed of Ti or Nb coated with Pt can be used. The materials composing the ion-adsorbing electrodes and the material composing the counter electrode can be unchanged or can be changed depending on whether the pH of a liquid is to be increased or decreased.

From another viewpoint, the counter electrode should have an actual surface area (the surface area measured by, for example, the BET method) that is not more than ten times (for example, not more than five times) the apparent surface area (the surface area of the outer shape) thereof. Such a counter electrode includes a general metallic electrode or graphite electrode. The counter electrode adsorbs ions when the surface area thereof increases, and the electrical quantity that contributes to pH change is reduced by the electrical quantity of the ions adsorbed by the counter electrode. On the other hand, the electrically conductive materials (C1 and C2) each may have an actual surface area (the surface area measured by, for example, the BET method) that is at least 10⁴ times the apparent surface area (the surface area of the outer shape) thereof.

The aqueous solution (A) contains at least one type of ions (L) in addition to protons (H⁺) and hydroxide ions (OH⁻). The ions (L) contain either one or both of at least one type of cations (L⁺) other than the protons and at least one type of anions (L⁻) other than the hydroxide ions. That is, the aqueous solution (A) is an aqueous solution containing either one or both of cations (L⁺) and anions (L⁻), for example, an aqueous solution containing salt dissolved therein. When the aqueous solution (A) is an aqueous solution containing both cations (L⁺) of salt and anions (L⁻) of salt, the electrically conductive material (C1) adsorbs the anions (L⁻) and the electrically conductive material (C2) adsorbs the cations (L⁺) in step (i).

The salt dissolved in the aqueous solution (A) is not particularly limited. Examples thereof include sodium chloride, calcium chloride, and potassium sulfate. An example of the aqueous solution (A) is tap water. When the ion concentration of the aqueous solution (A) needs to be increased, it can be increased easily by a method of, for example, dissolving a required amount of salt.

In the production method, the aqueous liquid used in step (ii) described above may be the aqueous solution (A) used in step (i). In this case, step (ii) is carried out, with the ion-adsorbing electrodes (E1) and (E2) remaining immersed in the aqueous solution (A) used in step (i).

The aqueous liquid to be treated in step (ii) is a liquid containing water, for example, a liquid containing at least 50 weight% (for example, at least 80 weight% or at least 90 wight%) of water. Typical examples of the aqueous liquid include water or an aqueous solution.

In the production method, the aqueous liquid used in step (ii) may be different from the aqueous solution (A) treated in step (i). Hereinafter, this case is described using examples.

### <First Example>

In the first example, the electrically conductive material (C1) adsorbs at least one type of anions (L⁻) contained in the ions (L) in step (i).

In step (ii), voltage then is applied between the ion-adsorbing electrode (E1) and the counter electrode so that the ion-adsorbing electrode (E1) serves as a cathode. Thereby the anions (L⁻) adsorbed by the electrically conductive material (C1) are released into a liquid and hydrogen ions are generated at the counter electrode, resulting in decreasing the pH of the liquid.

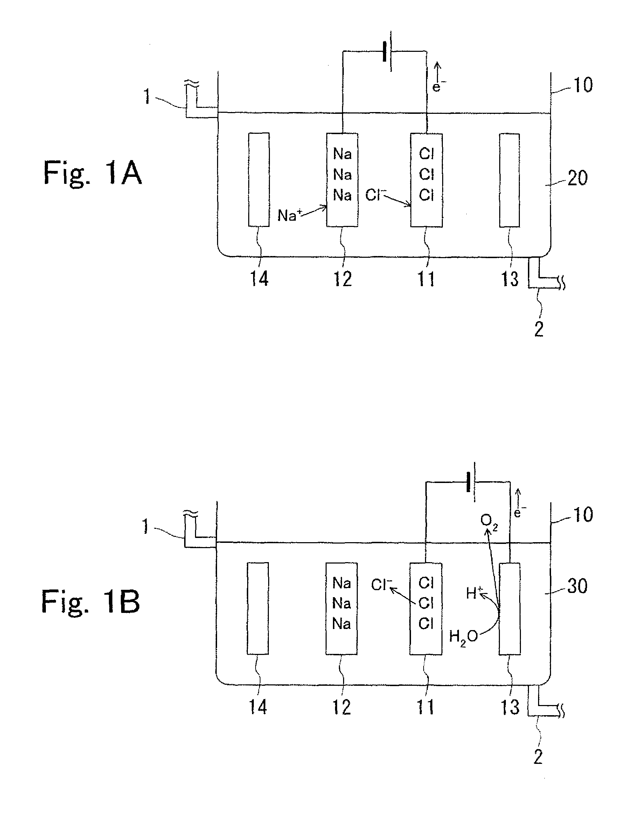

FIG. 1 schematically shows an example of the steps of the first example. First, as shown in FIG. 1A, an ion-adsorbing electrode 11 containing an electrically conductive material (C1) capable of adsorbing ions, an ion-adsorbing electrode 12 containing an electrically conductive material (C2) capable of adsorbing ions, a first counter electrode 13 and a second counter electrode 14 are immersed in an aqueous solution 20 (hatching is omitted) containing salt dissolved therein in a bath 10. The bath 10 is provided with an inlet 1 for introducing a liquid into the bath 10 and an outlet 2 for discharging the liquid from the bath 10.

In the example described below, the aqueous solution 20 is a sodium chloride aqueous solution, but it can be an aqueous solution containing one or more types of other salts dissolved therein.

DC voltage is applied between the ion-adsorbing electrode 11 and the ion-adsorbing electrode 12 so that the ion-adsorbing electrode 11 serves as an anode. This allows the electrically conductive material of the ion-adsorbing electrode 11 to adsorb anions (Cl⁻) of salt and allows the electrically conductive material of the ion-adsorbing electrode 12 to adsorb cations (Na⁺) of the salt. The voltage is preferably one that does not cause water electrolysis. However, since the voltage to be applied between the electrodes is subject to IR drop, the water electrolysis does not always occur even when a higher voltage than that theoretically causing water electrolysis is applied between the electrodes. This IR drop (voltage drop) is taken into consideration in setting the voltage as required (the same applies to the voltage application described below).

Next, voltage application is stopped and the aqueous solution 20 is replaced by a liquid 30. The liquid 30 is a liquid whose pH is to be adjusted, and is either water or an aqueous solution.

Subsequently, as shown in FIG. 1B, DC voltage is applied between the ion-adsorbing electrode 11 and the first counter electrode13 so that the ion-adsorbing electrode 11 serves as a cathode, and thereby a direct current flows. This allows the anions (Cl⁻) adsorbed by the electrically conductive material of the ion-adsorbing electrode 11 to be released into the liquid 30 and allows hydrogen ions (H⁺) and oxygen gas to be generated at the first counter electrode 13. With this treatment, the liquid 30 becomes hydrochloric acid and thereby the pH of the liquid 30 is decreased. In this case, the voltage to be applied is preferably one that does not cause hydrogen gas to be generated from the ion-adsorbing electrode 11. From another viewpoint, this method is a method for producing an acid solution.

The sodium ions adsorbed by the ion-adsorbing electrode 12 are prevented from eluting into the solution even while voltage is applied between the ion-adsorbing electrode 11 and the first counter electrode 13. The reason thereof is not clear but it may be because an electric double layer is formed on the surface of the ion-adsorbing electrode.

### <Second Example>

In the second example, the electrically conductive material (C2) adsorbs at least one type of cations (L⁺) contained in the ions (L) in step (i).

In step (ii), voltage is then applied between the ion-adsorbing electrode (E2) and the counter electrode so that the ion-adsorbing electrode (E2) serves as an anode. Thereby the cations (L⁺) adsorbed by the electrically conductive material (C2) are released into the liquid and hydroxide ions and hydrogen gas are generated at the counter electrode, resulting in increasing the pH of the liquid.

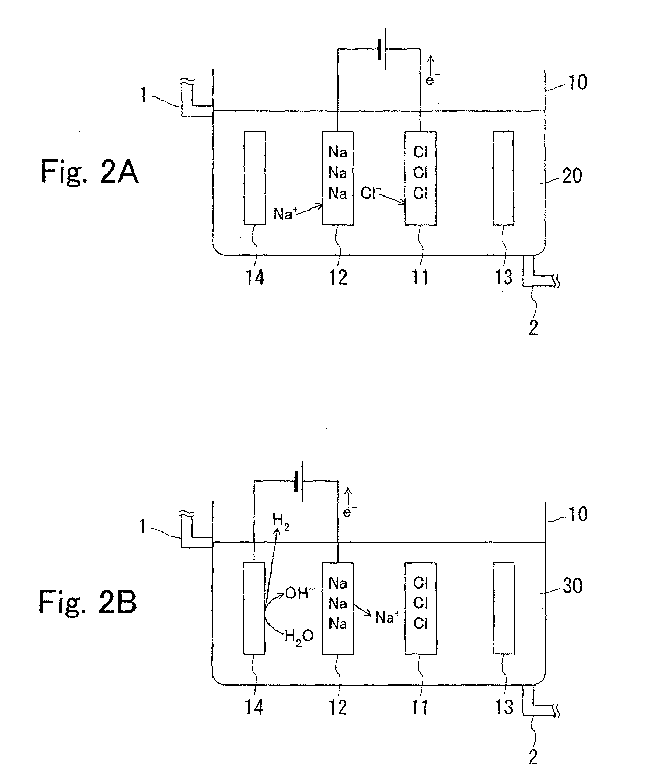

FIG. 2 schematically shows an example of the production steps of the second example. The step shown in FIG. 2A is identical to that shown in FIG. 1A.

Next, voltage application is stopped, and the aqueous solution 20 is replaced by a liquid 30. The liquid 30 is a liquid whose pH is to be adjusted, and is either water or an aqueous solution.

Subsequently, as shown in FIG. 2B, voltage is applied between the ion-adsorbing electrode 12 and the second counter electrode14 so that the ion-adsorbing electrode 12 serves as an anode, and thereby a current flows. This allows the cations adsorbed by the electrically conductive material of the ion-adsorbing electrode 12 to be released into the liquid 30 and allows hydroxide ions (OH⁻) and hydrogen gas to be generated at the second counter electrode 14. With this treatment, the liquid 30 becomes a sodium hydroxide aqueous solution and thereby the pH of the liquid 30 is increased. In this case, the voltage to be applied is preferably one that does not cause oxygen gas to be generated from the ion-adsorbing electrode 12. From another viewpoint, this method is a method for producing an alkaline solution.

The chlorine ions adsorbed by the ion-adsorbing electrode 11 are prevented from eluting into the solution even while voltage is applied between the ion-adsorbing electrode 12 and the second counter electrode 14. The reason thereof is not clear but it may be because an electric double layer is formed on the surface of the ion-adsorbing electrode.

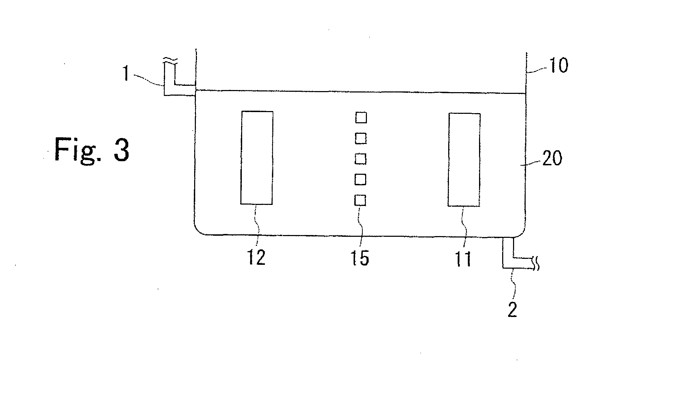

In the first and second examples described above, one counter electrode may be used instead of the two counter electrodes (the first counter electrode 13 and the second counter electrode 14). Furthermore, the shape of the counter electrodes is not limited. They may be net, porous, or linear electrodes. FIG. 3 shows an example in which only one net counter electrode was used. In this case, voltage is applied between a counter electrode 15 and either the ion-adsorbing electrode 11 or 12 in step (ii). The use of a counter electrode that allows ions to pass therethrough makes it easy for ions to move in the solution when the ion-adsorbing electrode adsorbs ions.

Furthermore, in the first and second examples described above, the solution inside the bath may be replaced after the method of the first example is carried out and then step (ii) of the method of the second example may be carried out. And the solution inside the bath may be replaced after the method of the second example is carried out and then step (ii) of the method of the first example may be carried out. In this case, it is possible to produce an acid solution and an alkaline solution alternately with a single ion-adsorption.

### <Third example>

In the third example, step (ii) of the first example described above and step (ii) of the second example described above are carried out separately after step (i). In step (i) of the third example, the electrically conductive material (C1) adsorbs at least one type of anions (L⁻) contained in the ions (L), and the electrically conductive material (C2) adsorbs at least one type of cations (L⁺) contained in the ions (L).

Step (ii) of the third example includes a step of applying voltage between the ion-adsorbing electrode (E1) and the first counter electrode so that the ion-adsorbing electrode (E1) serves as a cathode in a first liquid containing water, to allow the anions (L⁻) adsorbed by the electrically conductive material (C1) to be released into the first liquid and to allow hydrogen ions to be generated at the first counter electrode, resulting in decreasing the pH of the first liquid (step (ii-a)). Furthermore, step (ii) of the third example includes a step of applying voltage between the ion-adsorbing electrode (E2) and the second counter electrode so that the ion-adsorbing electrode (E2) serves as an anode in a second liquid containing water, to allow the cations (L⁺) adsorbed by the electrically conductive material (C2) to be released into the second liquid and to allow hydroxide ions to be generated at the second counter electrode, resulting in increasing the pH of the second liquid (step(ii-b)).

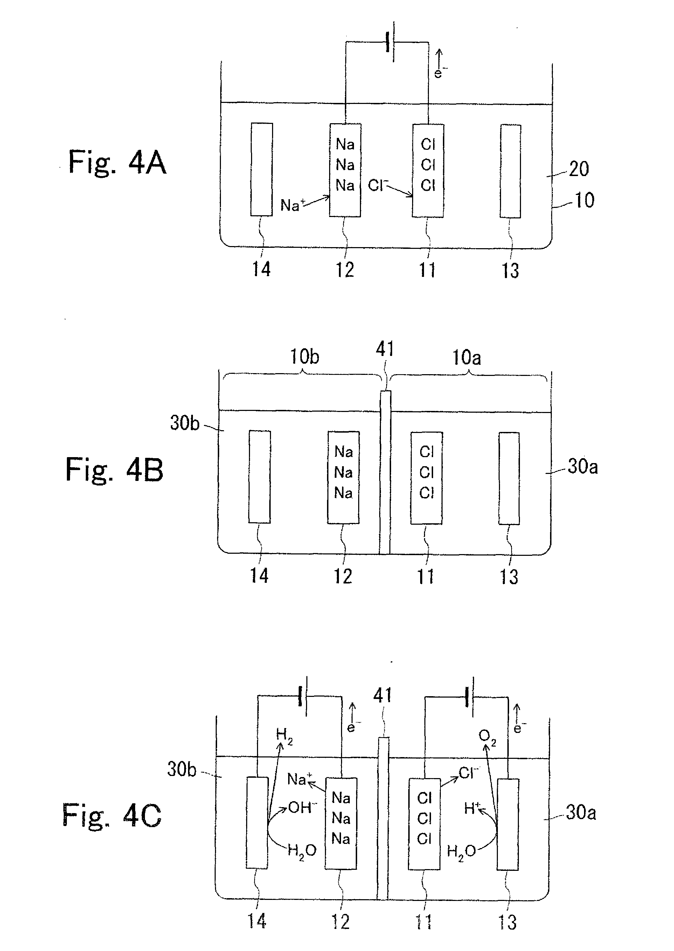

FIG. 4 schematically shows an example of step (ii) of the third example. In this example, as shown in FIG. 4B, a bath 10 is divided into a bath 10a and a bath 10b by a partition 41 after step (i) (FIG. 4A). The first liquid 30a is placed in the bath 10a, and the second liquid 30b is placed in the bath 10b. The partition 41 is a partition that does not allow ions to permeate. Furthermore, the partition 41 is a partition that can be disposed in a container in which a liquid to be treated is placed. As shown in FIG. 4C, step (ii) described above in the first example is carried out in the bath 10a. Moreover, step (ii) described above in the second example is carried out in the bath 10b. In this method, an aqueous acid solution and an aqueous alkaline solution may be produced simultaneously or may be produced separately.

An inlet 1 and an outlet 2 can be formed in each bath in an apparatus provided with a plurality of baths divided by a partition as in the apparatus shown in FIG. 4.

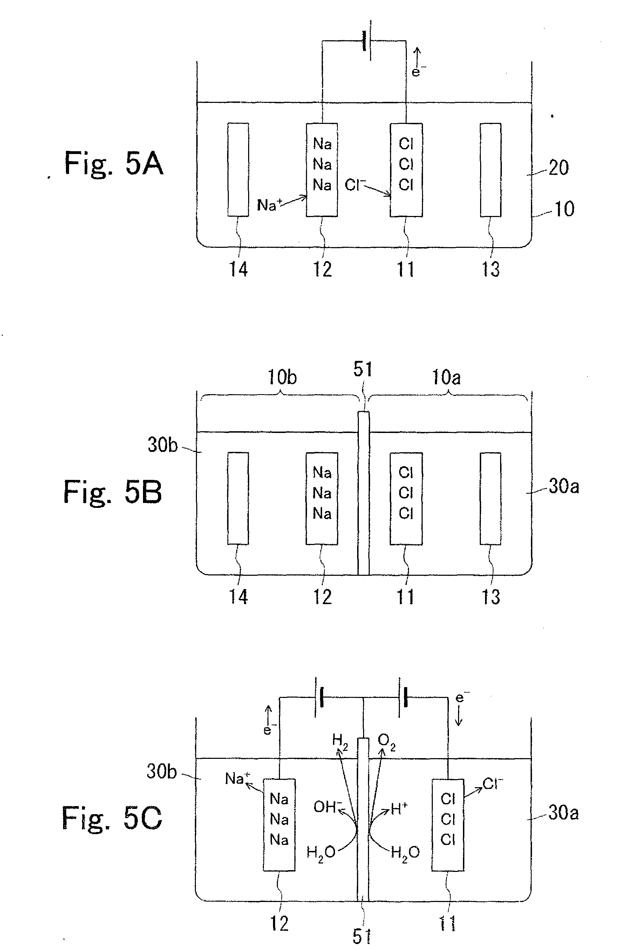

In the third example, as shown in FIG. 5C, the partition may be a partition 51 that also serves as a first counter electrode 13 and a second counter electrode 14. The steps shown in FIGs. 5A to 5C are identical to those shown in Fig. 4A to 4C except for using the partition 51 that also serves as the first counter electrode 13 and the second counter electrode 14. In this method, an aqueous acid solution and an aqueous alkaline solution may be produced simultaneously or may be produced separately.

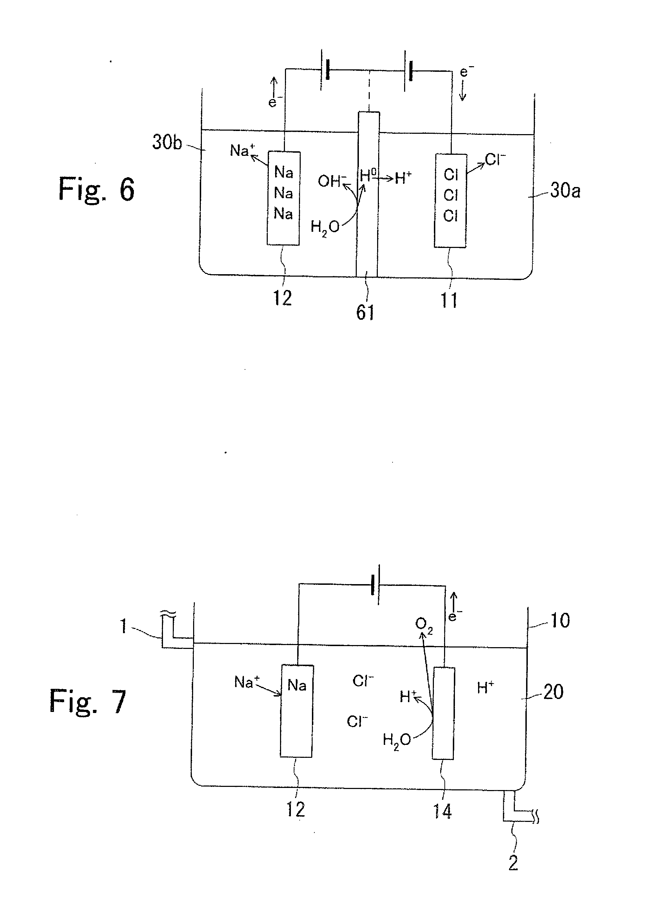

Furthermore, the partition that also serves as electrodes may be a partition 61 that allows a hydrogen atom to pass therethrough as shown in FIG. 6. In the case of using the partition 61 that allows a hydrogen atom to pass therethrough, when an aqueous alkaline solution is to be produced, hydrogen generated at one surface of the partition 61 passes through the partition 61 and is then released as a hydrogen ion at the surface of the partition 61 located on the side where an aqueous acid solution is produced. Accordingly, generation of hydrogen gas and oxygen gas can be reduced by the amount of hydrogen that has passed through the partition 61 to become hydrogen ions. Examples of the partition 61 that allows hydrogen atoms to pass therethrough include an iron sheet coated with Pt, a Nb sheet coated with Pt, and a Pd sheet.

### <Second pH adjustment method>

The second pH adjustment method which is a method of the present invention includes steps (I) and (II) described below.

In step (I), voltage is applied between an ion-adsorbing electrode (E1) containing an electrically conductive material (C1) capable of adsorbing ions and a counter electrode in an aqueous solution (A) containing at least one type of ions (L) other than hydrogen ions and hydroxide ions, and thereby the electrically conductive material (C1) is allowed to adsorb at least a part of the ions (L). Step (I) is carried out, with both the ion-adsorbing electrode and the counter electrode being immersed in the aqueous solution (A).

In step (II), voltage is applied between the ion-adsorbing electrode and the counter electrode in a liquid containing water (aqueous liquid) to allow the ions (L) adsorbed by the electrically conductive material to be released into the liquid and to allow hydrogen ions or hydroxide ions to be generated at the counter electrode, resulting in changing the pH of the liquid. Step (II) is carried out, with both the ion-adsorbing electrode and the counter electrode being immersed in the aqueous liquid. In step (II), voltage is applied so that water electrolysis occurs at the counter electrode.

The ion-adsorbing electrode, counter electrode, aqueous solution (A), aqueous liquid to be treated in step (II), and voltage applying method are identical to those used in the first pH adjustment method described above.

In the second pH adjustment method, step (I) and step (II) can be carried out in the same solution or can be carried out in different liquids from each other.

Step (I) of the second pH adjustment method can be the third pH adjustment method described below. When a different aqueous liquid from the aqueous solution (A) treated in step (I) is to be treated in step (II), the pH of the aqueous solution (A) can be increased in step (I) and the pH of the aqueous liquid can be decreased in step (II). Conversely, it also is possible to decrease the pH of the aqueous solution (A) in step (I) and to increase the pH of the aqueous liquid in step (II).

When the pH of the aqueous liquid is to be decreased in step (II), voltage is applied between the ion-adsorbing electrode (E1) and the counter electrode so that the ion-adsorbing electrode (E1) serves as an anode, to allow the electrically conductive material (C1) to adsorb at least one type of anions (L⁻) contained in the ions (L) in step (I). Next, in step (II), voltage is applied between the ion-adsorbing electrode (E1) and the counter electrode so that the ion-adsorbing electrode (E1) serves as a cathode, to allow the anions (L⁻) adsorbed by the electrically conductive material (C1) to be released into the aqueous liquid and to allow hydrogen ions to be generated at the counter electrode. Thus the pH of the aqueous liquid is decreased.

On the other hand, when the pH of the aqueous liquid is to be increased in step (II), voltage is applied between the ion-adsorbing electrode (E1) and the counter electrode so that the ion-adsorbing electrode (E1) serves as a cathode, to allow the electrically conductive material (C1) to adsorb at least one type of cations (L⁺) contained in the ions (L) in step (I). Next, in step (II), voltage is applied between the ion-adsorbing electrode (E1) and the counter electrode so that the ion-adsorbing electrode (E1) serves as an anode, to allow the cations (L⁺) adsorbed by the electrically conductive material (C1) to be released into the aqueous liquid and to allow hydroxide ions to be generated at the counter electrode. Thus the pH of the aqueous liquid is increased.

### <Third pH adjustment method>

A third pH adjustment method includes a step of applying voltage between an ion-adsorbing electrode (E1) containing an electrically conductive material (C1) capable of adsorbing ions and a counter electrode so that water electrolysis occurs at the counter electrode, in an aqueous solution (A) containing at least one type of ions (L) other than hydrogen ions and hydroxide ions, to allow the electrically conductive material (C1) to adsorb at least a part of the ions (L) and to allow hydrogen ions or hydroxide ions to be generated at the counter electrode, resulting in changing the pH of the aqueous solution (A).

The ion-adsorbing electrode, counter electrode, aqueous solution (A), and voltage applying method are identical to those used in the first pH adjustment method described above.

When the pH of the aqueous solution (A) is to be increased, voltage is applied so that the ion-adsorbing electrode serves as an anode, to allow the ion-adsorbing electrode to adsorb the anions (L⁻) contained in the aqueous solution (A) and to allow hydrogen gas and hydroxide ions to be generated at the counter electrode. Thus, the pH of the aqueous solution (A) is increased.

On the other hand, when the pH of the aqueous solution (A) is to be decreased, voltage is applied so that the ion-adsorbing electrode serves as a cathode, to allow the ion-adsorbing electrode to adsorb the cations (L⁺) contained in the aqueous solution (A) and to allow oxygen gas and hydrogen ions to be generated at the counter electrode. Thus, the pH of the aqueous solution (A) is decreased.

The second and third pH adjustment methods are described below using examples.

### <First Example>

In the first example, as shown in FIG. 7, an ion-adsorbing electrode 12 and a counter electrode 14 are immersed in an aqueous solution 20 containing salt (sodium chloride) dissolved therein in a bath 10. Thereafter, voltage is applied between the ion-adsorbing electrode 12 and the counter electrode 14 so that the ion-adsorbing electrode 12 serves as a cathode, and thereby the ion-adsorbing electrode 12 is allowed to adsorb cations (sodium ions). In this stage, water electrolysis occurs and oxygen gas and hydrogen ions are generated at the counter electrode 14. Thus, the aqueous solution 20 becomes an acid (hydrochloric acid) aqueous solution and the pH of the aqueous solution 20 is decreased.

Thereafter, it also is possible to replace the aqueous solution 20 with another liquid and to increase the pH of the liquid. In this case, voltage is applied between the ion-adsorbing electrode and the counter electrode so that the ion-adsorbing electrode 12 serves as an anode. This allows the cations (sodium ions) to be released from the ion-adsorbing electrode 12 and allows hydrogen gas and hydroxide ions to be generated at the counter electrode. Thus the pH of the liquid to be treated can be increased.

### <Second Example>

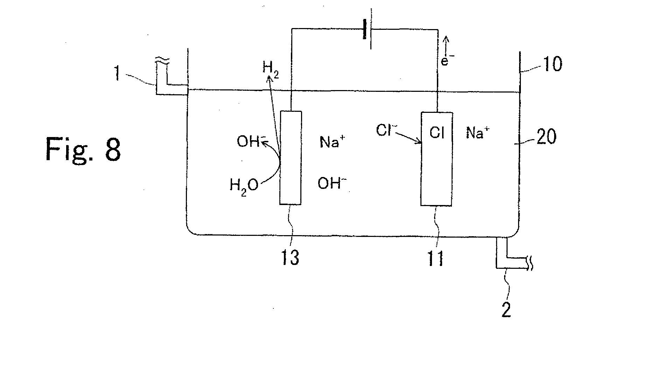

In the second example, as shown in FIG. 8, an ion-adsorbing electrode 11 and a counter electrode 13 are immersed in an aqueous solution 20 containing salt dissolved therein in a bath 10. Thereafter, voltage is applied between the ion-adsorbing electrode 11 and the counter electrode 13 so that the ion-adsorbing electrode 11 serves as an anode, and thereby the ion-adsorbing electrode 11 is allowed to adsorb anions (chlorine ions). In this stage, water electrolysis occurs and hydrogen gas and hydroxide ions are generated at the counter electrode 13. Thus, the aqueous solution 20 becomes an alkaline (sodium hydroxide) aqueous solution and the pH of the aqueous solution 20 is increased.

Thereafter, it also is possible to replace the aqueous solution 20 with another liquid and to decrease the pH of the liquid. In this case, voltage is applied between the ion-adsorbing electrode and the counter electrode so that the ion-adsorbing electrode 11 serves as a cathode. This allows the anions (chlorine ions) to be released from the ion-adsorbing electrode 11 and allows oxygen gas and hydrogen ions to be generated at the counter electrode. Thus the pH of the liquid to be treated can be decreased.

In the method described above, the amount of ions adsorbed by and released from the electrically conductive material (C1 or C2) may be detected through measurement of the amount of electric charges that flow through the electrodes. When no side reaction occurs, theoretically, it is possible to adjust the pH by changing the amount of electric charges because the integral electric charge determines the amount of the hydrogen ions or the hydroxide ions. In this case, if the amount of ions that can be adsorbed by the ion-adsorbing electrode has been measured beforehand, it can be detected that the amount of ions adsorbed by the electrode has almost reached the saturation amount, by monitoring the amount of charges that flow through the electrodes. The amount of ions that can be adsorbed by the ion-adsorbing electrode can be measured by, for example, voltammetry.

In the method described above, the amount of ions that have been adsorbed by the electrically conductive material (C1 or C2) may be detected through measurement of potential of the ion-adsorbing electrode. When the amount of ions that have been adsorbed by the electrically conductive material exceeds the saturation amount, the potential of the ion-adsorbing electrode changes to a potential at which water electrolysis occurs. Therefore, monitoring the change in potential can make it possible to detect that the amount of ions that have been adsorbed by the ion-adsorbing electrode has reached an approximate saturation amount. The potential of the ion-adsorbing electrode can be obtained from the difference in potential between a reference electrode and the ion-adsorbing electrode.

An ion-adsorbing electrode has a potential that is changed by ion adsorption. In an electrode that collects anions, the potential thereof increases with adsorption of anions, and when it exceeds the potential of oxygen generation, the electric current applied after that is consumed for generation of oxygen gas. On the other hand, in the electrode that collects cations, the potential thereof decreases with adsorption of cations, and when it becomes below the potential of hydrogen generation, the electric current applied after that is consumed for generation of hydrogen gas. Accordingly, it is possible to determine the saturated adsorption amount of the ion-adsorbing electrode by detecting that the amount of electric charges for ion adsorption or the ions adsorption amount has reached a certain value. At that point, it also is possible to initialize the ion adsorption amount.

In the pH adjustment methods, when the amount of the ions (L) that have been dissolved in the aqueous solution (A) is not sufficient, salt can be dissolved in the aqueous solution (A).

Furthermore, in the pH adjustment methods of the present invention, when the pH has been changed excessively, the pH can be adjusted by reversing the voltage application direction, i.e. by applying voltage, with the anode and the cathode being interchanged.

Furthermore, from another viewpoint, the pH adjustment methods can be used as methods for preparing at least one aqueous solution selected from an aqueous acid solution and an aqueous alkaline solution. That is, the method for decreasing pH can be used as a method for producing an aqueous acid solution or a method for neutralizing an aqueous alkaline solution. Moreover, the method for increasing pH can be used as a method for producing an aqueous alkaline solution or a method for neutralizing an aqueous acid solution.

From another viewpoint, the present invention provides a method for increasing the pH of a solution using a counter electrode and an ion-adsorbing electrode that has adsorbed cations. Furthermore, from another viewpoint, the present invention provides a method for decreasing the pH of a solution using a counter electrode and an ion-adsorbing electrode that has adsorbed anions.

An example of the first pH adjustment method includes (1) a step in which a first ion-adsorbing electrode containing a first electrically conductive material with a large specific surface area and a second ion-adsorbing electrode containing a second electrically conductive material with a large specific surface area are immersed in an aqueous solution containing salt dissolved therein and voltage is applied between the first ion-adsorbing electrode and the second ion-adsorbing electrode so that the first ion-adsorbing electrode serves as an anode, and thereby the first electrically conductive material of the first ion-adsorbing electrode is allowed to adsorb anions of the salt and the second electrically conductive material of the second ion-adsorbing electrode is allowed to adsorb cations of the salt, and (2) a step in which in a liquid containing water, voltage is applied between a counter electrode and either the first ion-adsorbing electrode or the second ion-adsorbing electrode, so that the pH of the liquid is adjusted.

An example of the second pH adjustment method includes (1) a step in which a first ion-adsorbing electrode containing a first electrically conductive material with a large specific surface area and a first counter electrode are immersed in an aqueous solution containing salt dissolved therein and voltage is applied between the first ion-adsorbing electrode and the first counter electrode, and thereby the first electrically conductive material of the first ion-adsorbing electrode is allowed to adsorb ions of the salt, and (2) a step in which in a liquid containing water, voltage is applied between the first ion-adsorbing electrode and the first counter electrode to allow the ions to be released from the first ion-adsorbing electrode into the liquid and to allow hydrogen ions or hydroxide ions to be generated at the first counter electrode, resulting in adjusting the pH of the liquid.

An example of the third pH adjustment method includes a step in which a first ion-adsorbing electrode containing a first electrically conductive material with a large specific surface area and a first counter electrode are immersed in an aqueous solution containing salt dissolved therein and voltage is applied between the first ion-adsorbing electrode and the first counter electrode, and thereby the first electrically conductive material of the first ion-adsorbing electrode is allowed to adsorb ions of the salt and hydrogen ions or hydroxide ions are allowed to be generated at the first counter electrode, resulting in adjusting the pH of the liquid.

### <pH adjuster>

A pH adjuster is an apparatus for carrying out the pH adjustment methods described above. Accordingly, the descriptions of the items mentioned above in the explanation of the pH adjustment methods may not be repeated.

From another viewpoint, this apparatus can be used as an apparatus for producing an aqueous acid solution and/or an aqueous alkaline solution, or can be used as an apparatus for neutralizing an acid solution and/or an aqueous alkaline solution. Schematic configurations of examples of the apparatus are shown in FIGs. 1 to 8.

### <Second and Third pH adjusters>

A second pH adjusters which is a pH adjuster of the present invention and a third pH adjuster each includes a container, an ion-adsorbing electrode (E1) containing an electrically conductive material (C1) capable of adsorbing ions, a counter electrode, and a voltage applying means. The ion-adsorbing electrode (E1) can be disposed in the container. The voltage applying means applies voltage between the ion-adsorbing electrode (E1) and the counter electrode.

The container is not particularly limited as long as it can hold an aqueous salt solution, an aqueous acid solution, and an aqueous alkaline solution. Preferably, this container is provided with a mechanism that facilitates replacement of a liquid inside the container. For example, it is preferable that this container be provided with an inlet for allowing a liquid to flow into the container and an outlet for discharging the liquid inside the container. The use of an electrolytic bath provided with an inlet and an outlet makes it possible to treat liquids continuously. Furthermore, when the inlet and the outlet each is provided with a valve, a treatment of a batch of liquid is facilitated.

For the ion-adsorbing electrode and counter electrode, the above-mentioned ion-adsorbing electrodes and counter electrodes can be used.

The voltage applying means to be used herein can be, for example, a DC power supply such as a constant-current power supply or a constant-voltage power supply. In order to adjust the pH, such a DC power supply may be used in combination with a timer, a coulombmeter, or a pH meter. For example, a constant-current power supply and a timer may be used in combination. And a constant-current power supply or a constant-voltage power supply and a coulombmeter and/or a pH meter may be used in combination.

The second and third pH adjusters are those shown in FIGs. 7 and 8. Each bath 10 shown in FIGs. 7 and 8 corresponds to the container.

The second pH adjuster adjusts the pH of a liquid by carrying out the steps of the second pH adjustment method described above. That is, the second pH adjuster carries out step (I) and step (II) described above.

The third pH adjuster adjusts the pH of a liquid by carrying out a step of the third pH adjustment method described above.

In order to detect the amount of ions that is being adsorbed by the ion-adsorbing electrode or the amount of ions that have been adsorbed by and released from the ion-adsorbing electrode, a constant-current power supply and a timer may be used in combination, a constant-voltage power supply and a coulombmeter may be used in combination, or a constant-current power supply or a constant-voltage power supply and a coulombmeter and/or a reference electrode may be used in combination. In this case, the reference electrode may be one that uses, as a reference, a potential of hydrogen generation or a potential of oxygen generation obtained in electrolyzing water (for instance, neutral water) with a minute electric current using an electrode for water electrolysis.

### <First pH adjuster>

A first pH adjuster further includes an ion-adsorbing electrode (E2) containing an electrically conductive material (C2) capable of adsorbing ions in addition to the components of the adjusters described above. In this case, the voltage applying means applies voltage between at least two electrodes selected from the group consisting of the ion-adsorbing electrode (E1), the ion-adsorbing electrode (E2) and the counter electrode. The ion-adsorbing electrode (E2) to be used herein can be the aforementioned ion-adsorbing electrode. Examples of this apparatus are those shown in FIGs. 1 to 6.

This first pH adjuster adjusts the pH of a liquid by carrying out the steps of the first pH adjustment method described above. That is, the first pH adjuster carries out step (i) and step (ii) described above.

In the above-mentioned apparatus, the counter electrode can include first and second counter electrodes. In this case, the voltage applying means applies voltage between at least two electrodes selected from the group consisting of the ion-adsorbing electrode (E1), the ion-adsorbing electrode (E2), the first counter electrode and the second counter electrode. Specifically, voltage is applied between two ion-adsorbing electrodes or between an ion-adsorbing electrode and a counter electrode. An example of this apparatus is an apparatus shown in FIG. 1. This apparatus can carry out step (ii) that includes step (ii-a) and step (ii-b).

In the above-mentioned apparatus, at least one aqueous solution selected from an aqueous acid solution and an aqueous alkaline solution may be prepared.

As shown in FIGs. 4 to 6, the above-mentioned apparatus further may include a partition for dividing a liquid to be treated. This partition can be disposed in the container. The partition to be used herein can be the partition described above. This apparatus can carry out step (ii-a) and step (ii-b) included in the step (ii) separately or simultaneously.

The first to third pH adjusters of the present invention each is provided with a controller for carrying out each step. For such a controller, a known controller can be used that includes an arithmetic processing unit and a memory unit. In the memory unit, for example, a program for carrying out each step and a target pH value are recorded. This controller controls voltage to be applied to electrodes based on, for example, the target pH value (and an input value from each sensor as required).

With the above-mentioned pH adjustment methods and pH adjusters, liquids may be treated continuously or a liquid may be treated by a batch method. In this case, the "batch method" denotes that a liquid inside a container is treated without substantially replacing the liquid inside the container while one step is carried out. When the treatment of the aqueous solution (A) is completed, usually the aqueous solution (A) inside the container is discharged and another liquid is introduced into the container. Generally, the addition of an aqueous solution or discharge of an aqueous solution inside the container is not carried out until the treatment is completed. As long as the liquid inside the container is not replaced substantially until the treatment is completed, it is considered as a treatment according to the batch method. In other words, even if a trace amount of aqueous solution that does not affect the treatment is added or discharged, it is considered as a batch method. For example, even when 20 vol% or less (for example, 10 vol% or less, 5 vol% or less, or 1 vol% or less) of aqueous solution inside the container is added or discharged during the treatment, it can be considered as a batch method.

In the first and second pH adjustment methods including two steps and the first and second pH adjusters that carry out two steps, the two steps each may be carried out through a batch treatment or may be carried out through a treatment with a liquid being allowed to flow continuously (flowing liquid treatment). Examples of the combination of [former step] / [latter step] include batch treatment/batch treatment, batch treatment/flowing liquid treatment, flowing liquid treatment/batch treatment, and flowing liquid treatment/flowing liquid treatment.

In the pH adjusters of the present invention, the amount of ions adsorbed by or released from the electrically conductive material (C1 or C2) may be detected by measuring the amount of electric charges that flow through the electrode. Furthermore, in the pH adjusters of the present invention, the amount of ions that have been adsorbed by the electrically conductive material (C1 or C2) may be detected by measuring the potential of the ion-adsorbing electrode (E1 or E2). Moreover, the pH adjusters of the present invention each further may include a pH meter. Using the pH adjusters of the present invention, at least one aqueous solution selected from an aqueous acid solution and an aqueous alkaline solution may be prepared.

### <Examples>

Hereinafter, the present invention is described in further detail using examples. The activated carbon clothes used in the following examples each were an activated carbon fiber cloth manufactured by Nippon Kynol Inc (Article No. ACC-5092-25, with an area density of 100 to 130 g/m², a thickness of about 0.5 mm, and an iodine adsorption of 1850 to 2100 mg/g). This activated carbon fiber cloth has a specific surface area of at least about 2000 m²/g.

### [Example 1]

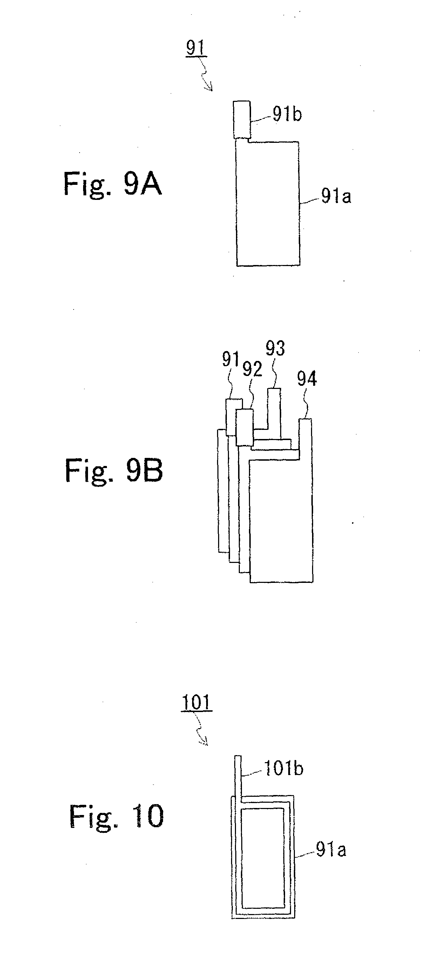

As shown in FIG. 9A, first, an activated carbon cloth of about 5 cm x 6 cm was prepared. A collector 91b formed of Ti coated with Pt was attached to the activated carbon cloth 91a. Thus an activated carbon electrode (ion-adsorbing electrode) 91 was produced. Furthermore, an activated carbon electrode 92 was produced by the same method. Counter electrodes 93 and 94 each were produced by coating a Ti electrode with Pt.

Thereafter, as shown in FIG. 9B, the activated carbon electrodes 91 and 92 were disposed between the counter electrode 93 and the counter electrode 94. This was.placed in a box-shaped container with an internal volume of 100 ml. In this container, 80 ml of a NaCl aqueous solution with a concentration of 0.01 mol/liter was placed.

Next, an electric current of 100 mA was applied between the activated carbon electrodes for three minutes (0.1 A x 180 sec = 18C), and the anode was allowed to adsorb chlorine ions and the cathode was allowed to adsorb sodium ions in the same manner as shown in FIG. 1A. Thereafter, an electric current of 80 mA was applied for 30 seconds without replacing the solution, with the activated carbon electrode that had adsorbed chlorine ions serving as a cathode and the counter electrode facing the activated carbon electrode serving as an anode. With this treatment, an aqueous acid solution was produced. The aqueous solution thus obtained had a pH of 4.82.

### [Example 2]

The same electrodes and NaCl aqueous solution as those used in Example 1 were prepared and were disposed in the same manner as in Example 1. Next, an electric current of 100 mA was applied between the activated carbon electrodes for three minutes (0.1 A x 180 sec = 18C), and thereby the anode was allowed to adsorb chlorine ions and the cathode was allowed to adsorb sodium ions. Thereafter, an electric current of 60 mA was applied for 20 seconds without replacing the solution, with the activated carbon electrode that had adsorbed sodium ions serving as an anode and the counter electrode serving as a cathode. Thus, an aqueous alkaline solution was produced. The aqueous solution thus obtained had a pH of 9.77.

### [Example 3]

The same activated carbon electrodes and NaCl aqueous solution as those used in Example 1 were prepared. A Ti net electrode whose surface had been coated with Pt was prepared. These were disposed in the same manner as shown in FIG. 9B.

Next, an electric current of 100 mA was applied between the activated carbon electrodes for three minutes (0.1 A x 180 sec = 18C), and thereby the anode was allowed to adsorb chlorine ions and the cathode was allowed to adsorb sodium ions. Thereafter, an electric current of 160 mA was applied for 120 seconds without replacing the solution, with the activated carbon electrode that had adsorbed chlorine ions serving as a cathode and the counter electrode serving as an anode. Thus, an aqueous acid solution was produced. The aqueous solution thus obtained had a pH of 3.98.

Next, the aqueous acid solution (an aqueous acid solution containing NaCl) was discharged from the bath and the inside of the bath was washed well with tap water. Thereafter, 80 ml of tap water was put into the bath. Then an electric current of 120 mA was applied for 160 seconds, with the activated carbon electrode that had adsorbed sodium ions serving as an anode and the counter electrode serving as a cathode. Thus, an aqueous alkaline solution was produced. The aqueous alkaline solution thus obtained had a pH of 11.04.

### [Example 4]

Like the electrode shown in FIG. 9A, a collector formed of Ti coated with Pt was attached to an activated carbon cloth of 3 cm x 5 cm and thus an activated carbon electrode was produced. Furthermore, a counter electrode was produced by coating a Ti electrode with Pt as in Example 1.

Next, the activated carbon electrode and the counter electrode were allowed to face each other, with a separator being interposed therebetween. They were placed in a box-shaped container with an internal volume of 50 ml. Nylon mesh was used for the separator (the same applies to the following examples).

Next, 10 ml of tap water (with an electric conductivity of about 180 µS and a pH of about 7.0) was placed in the container. Thereafter, with the activated carbon electrode serving as a cathode and the counter electrode serving as an anode, a constant electric current was applied therebetween. Thus an aqueous acid solution was produced. In this case, two experiments were carried out using different electric current amounts and voltage application times. Furthermore, with the same configuration, an aqueous alkaline solution was produced, with the polarity for the voltage application being changed. With respect to the production of the aqueous alkaline solution, four experiments were carried out using different electric current amounts and voltage application times. These treatment conditions and pH of the aqueous solutions obtained thereunder are indicated in the table.

**[Table 1]**

| | Electric current (mA) | Voltage application time (sec) | pH |
|---|---|---|---|
| Production of aqueous acid solution | 60 | 10 | 3.27 |
| | 60 | 60 | 2.97 |
| Production of aqueous alkaline solution | 60 | 60 | 10.46 |
| | 10 | 30 | 9.38 |
| | 60 | 5 | 9.35 |
| | 20 | 15 | 9.51 |

When acid water is to be produced by the method of Example 4, cations in an aqueous solution containing ions were taken into the activated carbon electrode and hydrogen ions whose amount corresponds to the amount of electric charges of the cations are produced through water electrolysis. On the other hand, when alkaline water is to be produced, anions in the aqueous solution containing ions are taken into the activated carbon electrode and hydroxide ions whose amount corresponds to the amount of electric charges of the anions are produced through water electrolysis. Therefore, with the total ion concentration remaining unchanged, the pH can be changed while the concentration of salt contained in the aqueous solution decreases conversely. According to this method, water with a pH around 3 to 11 was able to be produced even from tap water.

### [Example 5]

Like the electrode shown in FIG. 9A, a collector formed of Ti coated with Pt was attached to an activated carbon cloth of 3 cm x 5 cm and thus an activated carbon electrode was produced. Furthermore, a counter electrode was produced by coating a Ti electrode with Pt as in Example 1. Next, the activated carbon electrode and the counter electrode were allowed to face each other, with a separator being interposed therebetween. They were placed in a box-shaped container with an internal volume of 15 ml, and further 10 ml of NaCl aqueous solution with a concentration of 0.1 mol/liter was placed into the container.

Next, when an aqueous acid solution is to be produced, with the activated carbon electrode serving as an anode and the counter electrode serving as a cathode, an electric current of 60 mA was applied therebetween for 500 seconds and thereby the activated carbon electrode was allowed to adsorb chlorine ions. Thereafter, the NaCl aqueous solution inside the container was discharged and the inside of the container was washed. The aqueous solution inside the container was replaced with tap water. In this state, an electric current was applied, with the polarities being exchanged, i.e. with the activated carbon electrode serving as a cathode and the counter electrode serving as an anode. Thus an aqueous acid solution was produced. In this case, three experiments were carried out using different electric current amounts and voltage application times.

When an aqueous alkaline solution is to be produced, with the activated carbon electrode serving as a cathode and the counter electrode serving as an anode, an electric current of 60 mA was applied therebetween for 400 seconds and thereby the activated carbon electrode was allowed to adsorb sodium ions. Thereafter, the NaCl aqueous solution inside the container was discharged and the inside of the container was washed. The aqueous solution inside the container was replaced with tap water. In this state, an electric current was applied, with the polarities being exchanged, i.e. with the activated carbon electrode serving as an anode and the counter electrode serving as a cathode. Thus an aqueous alkaline solution was produced. In this case, three experiments were carried out using different electric current amounts and voltage application times.

These results are indicated in the table.

**[Table 2]**

| | Electric current (mA) | Voltage application time (sec) | pH |
|---|---|---|---|
| Production of aqueous acid solution | 10 | 2400 | 2.14 |
| | 60 | 40 | 2.89 |
| | 60 | 240 | 2.53 |
| Production of aqueous alkaline solution | 10 | 30 | 10.87 |
| | 10 | 120 | 11.50 |
| | 3 | 8000 | 12.22 |

### [Example 6]

Like the electrode shown in FIG. 9A, a collector formed of Ti coated with Pt was attached to an activated carbon cloth of 3 cm x 5 cm and thus an activated carbon electrode was produced. Furthermore, a counter electrode was produced by coating a Ti electrode with Pt as in Example 1. Next, the activated carbon electrode and the counter electrode were allowed to face each other, with a separator being interposed therebetween. They were placed in a box-shaped container with an internal volume of 50 ml. Then 40 ml of the aqueous acid solution with a pH of 4.8 produced in-Example 1 was poured into the container.

Next, with the activated carbon electrode serving as an anode and the counter electrode serving as a cathode, a constant electric current of 60 mA was applied therebetween for 20 seconds. This current application allowed the activated carbon to adsorb chlorine ions and allowed hydrogen gas to be generated at the counter electrode. Thereby the aqueous acid solution was neutralized. Thus, the aqueous acid solution with a pH of 4.8 was neutralized and a pH of 7.5, which was approximately neutral, was obtained.

### [Example 7]

Two sheets of activated carbon cloth 91a of 3 cm x 5 cm were stacked together. As shown in FIG. 10, a collector 101b formed of Ti coated with Pt was attached thereto, and thereby an active carbon electrode 101 was produced. The collector 101b also was formed in the outer periphery of the activated carbon cloth 91a.

A counter electrode was produced in the same manner as in Example 1. Next, the activated carbon electrode and the counter electrode were allowed to face each other, with a separator being interposed therebetween. They were placed in a box-shaped container with an internal volume of 50 ml, and 40 ml of tap water was placed into the container.

Thereafter, with the activated carbon electrode serving as a cathode and the counter electrode serving as an anode, a constant electric current of 60 mA was applied therebetween for 60 seconds. This allowed the activated carbon electrode to adsorb cations and allowed oxygen to be generated at the counter electrode. This operation was repeated five times. Thus the activated carbon electrode was allowed to adsorb cations sufficiently. Thereafter, with the activated carbon electrode serving as an anode and the counter electrode serving as a cathode, a constant electric current of 60 mA was applied therebetween for ten seconds. Thus an aqueous alkaline solution was produced.

Next, the aqueous alkaline solution thus produced was discharged and tap water then was placed into the container again. Thereafter, with the activated carbon electrode serving as an anode and the counter electrode serving as a cathode, a constant electric current of 60 mA was applied therebetween for ten seconds. Thereby an aqueous alkaline solution was produced. In this manner, using the cations that were allowed to be adsorbed by the activated carbon electrode first, production of an aqueous alkaline solution was repeated.

As a result, an aqueous alkaline solution with a pH as high as 9.8 was obtained first and the pH decreased to around 9.5 after the operation was repeated about ten times. The pH tended to decrease gradually. However, it was possible to carry out the repetitive experiments 60 times before the pH decreased to 9.0 or lower.

That is, with an activated carbon electrode with a size of 15 cm² and an area density of 230g/m² (two stacked sheets of a cloth with an area density of 115 g/m²), 2400 ml of an aqueous alkaline solution with a pH of at least 9 was produced.

In this experiment, a collector configuration as shown in FIG. 10 was used for reducing the effect of resistance of the activated carbon cloth, When an electrode with a configuration shown in FIG. 9A was used, an aqueous alkaline solution with approximately the same pH as that obtained when the electrode shown in FIG. 10 was used was obtained in the early stage. However, when the production of the aqueous alkaline solution was repeated, the pH was decreased to lower than 9 after the production was repeated about 30 times. However, when the electric current density was reduced and electric current was applied for a longer period of time (i.e. the amount of electric charges remained unchanged), it was possible to produce an aqueous alkaline solution with a pH of at least 9 up to about 70 times even after that.

The reason why it is difficult to produce an aqueous alkaline solution with a high pH when the electric current density is high is conceivable as follows. That is, the IR drop increases due to the resistance of the activated carbon fibers to cause a part of the surface of the activated carbon electrode to have a potential of oxygen generation, and thereby the efficiency deteriorates.

### [Example 8]

A container was prepared that had an internal volume of about 100 ml normally and a configuration that allowed a partition (a metal plate) to be inserted in the middle of the container to divide it into two 50-ml chambers. The metal plate used as a partition was one formed of a Ti plate whose both surfaces had been Pt-plated.

In the container in which no partition had been set, two sheets of an activated carbon electrode (an activated carbon cloth of 3 cm x 5 cm) were disposed and then 80 ml of NaCl aqueous solution with a concentration of 0.1 mol/liter were placed in the container. Thereafter, an electric current of 50 mA was applied for 300 seconds to allow an anode to adsorb chlorine ions and to allow a cathode to adsorb sodium ions.

Next, one activated carbon electrode was removed and was attached to one surface of the partition, with a separator being interposed therebetween. Furthermore, the other activated carbon electrode was removed and was attached to the other surface of the partition, with a separator being interposed therebetween.

This partition (metal plate) was set into the container. Then an aqueous acid solution was produced with the partition (also serving as a counter electrode) and the activated carbon electrode that had adsorbed chlorine ions. An aqueous alkaline solution was produced with the partition (also serving as an electrode for water electrolysis) and the activated carbon electrode that had adsorbed sodium ions.

This experiment was carried out using continuously flowing water as the water to be treated. The amount of electric current and the amount of flowing water were 60 mA and 100 ml/min on the side where the aqueous acid solution was to be produced and 60 mA and 240 ml/min on the side where the aqueous alkaline solution was to be produced. The treatment was carried out for one minute. The aqueous alkaline solution thus obtained had a pH of 9.3 and the aqueous acid solution had a pH of 5.2.

### [Example 9]

An electrode group was produced with a structure of counter electrode / separator / activated carbon electrode / separator / counter electrode / separator / activated carbon electrode / separator / counter electrode. The counter electrodes used herein each were one described in Example 1. The activated carbon electrode each was produced by attaching the same collector as shown in FIG. 9A to an activated carbon cloth (3 cm x 5 cm).

The electrode group thus produced was placed in a container whose volume was 50 ml and 40 ml of tap water was placed therein. Thereafter, electric current was applied, with the counter electrode being used as a cathode and the activated carbon cloth being used as an anode. Thus an aqueous alkaline solution was produced. In this case, five experiments (under conditions 1 to 5) were carried out with different electric current amounts and treatment times while the electric charge amount (coulomb amount) remained constant.

The conditions for the experiments and results thereof are shown in the table.

**[Table 3]**

| Condition | Electrode configuration | | Current amount (mA) | Treatment time (sec) | Average voltage (V) | pH |
|---|---|---|---|---|---|---|
| | Collector wiring | Activated carbon cloth | | | | |
| 1 | None | 1 sheet | 40 | 30 | 3 | 9.8 |
| 2 | None | 1 sheet | 80 | 15 | 5 | 9.7 |
| 3 | None | 1 sheet | 120 | 10 | 8 | 9.7 |
| 4 | None | 1 sheet | 200 | 6 | 12 | 9.6 |
| 5 | None | 1 sheet | 300 | 4 | 19 | 9.5 |
| 6 | Yes | 1 sheet | 300 | 4 | 6.5 | 9.5 |
| 7 | Yes | 2 sheets stacked together | 300 | 4 | 5 | 9.5 |

Further, the same electrode group as described above was produced except that the configuration of the collector of an electrode was that shown in FIG. 10, i.e. a configuration with a collector wiring disposed around the activated carbon cloth (where one sheet of an activated carbon cloth was used). Using this electrode group (condition 6), an aqueous alkaline solution was produced in the same manner as described above.

Moreover, the same electrode group as that described above was produced except that the configuration of the collector of an electrode was that shown in FIG. 10 and two stacked sheets of an activated carbon cloth were used. Using this electrode group (condition 7), an aqueous alkaline solution was produced in the same manner as described above.

Table 3 also indicates the results of the experiments carried out under the conditions 6 and 7. As indicated in Table 3, approximately the same pH was obtained when the coulomb amount was the same. Thus, the pH of the liquid to be treated was adjusted to be approximately constant by controlling the coulomb amount that passed through the electrodes.

However, with a lower electric current density, the efficiency was a little better and the amount of power consumption was reduced. In this case, however, it takes longer to obtain an aqueous solution with a predetermined pH.

Furthermore, in the experiment carried out under the condition 6, the amount of electric energy was reduced to about one third as compared to the condition 5 where the amount of the current was the same. In the experiment carried out under the condition 7, the amount of electric energy was reduced to about one fourth as compared to the condition 5 where the amount of the current was the same. When such configurations are employed for the treatment with a high current, aqueous solutions with a high pH were obtained in a shorter treatment time with reduced power consumption.

As shown in Table 3, when water electrolysis is allowed to occur at the counter electrode, it is preferable that there be a time for applying a voltage exceeding 3 V between the ion-adsorbing electrode and the counter electrode.

As described above, the embodiments of the present invention were described using examples. However, the present invention is not limited to the embodiments described above and is applicable to other embodiments based on the technical idea of the present invention.

### Industrial Applicability

The present invention can be used for a method for adjusting pH, a method for producing an acid solution, a method for producing an alkaline solution, a method for neutralizing an acid solution, a method for neutralizing an alkaline solution, and apparatuses for carrying out the methods described above.

## Claims

1. A method for adjusting pH of a liquid (30) containing water, comprising:
(I) applying voltage between a counter electrode (13, 14) and an ion-adsorbing electrode (E1,11,12) containing an electrically conductive material (C1) that contains activated carbon and that is capable of adsorbing an ion, in an aqueous solution (A) containing at least one type of ions (L) other than a hydrogen ion and a hydroxide ion, to allow the activated carbon to adsorb at least a part of the ions (L), and
(II) applying voltage between the ion-adsorbing electrode (E1,11,12) and the counter electrode (13,14) in the liquid (30) to allow the ions (L) adsorbed by the activated carbon to be released into the liquid (30) and to allow a hydrogen ion or a hydroxide ion to be generated at the counter electrode,
wherein the counter electrode (13, 14) is a metallic electrode or a graphite electrode.

2. The method for adjusting pH according to claim 1, wherein the liquid used in the step (II) is different from the aqueous solution (A) treated in the step (I).

3. The method for adjusting pH according to claim 1, wherein in the step (I), voltage is applied between the ion-adsorbing electrode (E1) and the counter electrode so that the ion-adsorbing electrode (E1) serves as an anode, to allow the electrically conductive material (C1) to adsorb at least one type of anions (L⁻) contained in the ions (L), and
in the step (II), voltage is applied between the ion-adsorbing electrode (E1) and the counter electrode so that the ion-adsorbing electrode (E1) serves as a cathode, to allow the anion (L⁻) that has adsorbed by the electrically conductive material (C1) to be released into the liquid and to allow a hydrogen ion to be generated at the counter electrode, resulting in decreasing pH of the liquid.

4. The method for adjusting pH according to claim 1, wherein in the step (I), voltage is applied between the ion-adsorbing electrode (E1) and the counter electrode so that the ion-adsorbing electrode (E1) serves as a cathode, to allow the electrically conductive material (C1) to adsorb at least one type of cations (L⁺) contained in the ions (L), and
in the step (II), voltage is applied between the ion-adsorbing electrode (E1) and the counter electrode so that the ion-adsorbing electrode (E1) serves as an anode, to allow the cation (L⁺) that has adsorbed by the electrically conductive material (C1) to be released into the liquid and to allow a hydroxide ion to be generated at the counter electrode, resulting in increasing pH of the liquid.

5. An apparatus for adjusting pH, comprising:
a container;
an ion-adsorbing electrode (E1) containing an electrically conductive material (C1) that contains activated carbon and that is capable of adsorbing an ion;
a counter electrode,
a voltage applying means, and
a controller,
wherein the counter electrode (13, 14) is a metallic electrode or a graphite electrode and
the controller includes an arithmetic processing unit and a memory unit, and wherein, in the memory unit is recorded:
- a program for carrying out each step of a method according to any of claims 1 to 4, and
- a target pH value.

6. The apparatus for adjusting pH according to claim 5, wherein the counter electrode is a metallic electrode.

## Patentansprüche

1. Verfahren zum Einstellen des pH-Werts einer wasserenthaltenden Flüssigkeit (30), umfassend:
(I) Anlegen einer Spannung zwischen einer Gegenelektrode (13, 14) und einer ionenadsorbierenden Elektrode (E1, 11, 12), welche ein elektrisch leitendes Material (C1) enthält, das Aktivkohle enthält und dazu in der Lage ist, ein Ion zu adsorbieren, in einer wässrigen Lösung (A), die wenigstens eine Art von Ionen (L) enthält, welche weder ein Wasserstoffion noch ein Hydroxidion sind, damit die Aktivkohle wenigstens einen Teil der Ionen (L) adsorbieren kann, und
(II) Anlegen einer Spannung zwischen der ionenadsorbierenden Elektrode (E1, 11, 12) und der Gegenelektrode (13, 14) in der Flüssigkeit (30), damit die von der Aktivkohle adsorbierten Ionen (L) in die Flüssigkeit freigesetzt werden können und an der Gegenelektrode ein Wasserstoffion oder ein Hydroxidion erzeugt werden kann,
wobei die Gegenelektrode (13, 14) eine Metall- oder eine Graphitelektrode ist.

2. Verfahren zur Anpassung des pH-Werts nach Anspruch 1, wobei die in Schritt (II) verwendete Flüssigkeit eine andere als die in Schritt (I) behandelte wässrige Lösung (A) ist.

3. Verfahren zur Anpassung des pH-Werts nach Anspruch 1, wobei
in Schritt (I) eine Spannung zwischen der ionenadsorbierenden Elektrode (E1) und der Gegenelektrode angelegt wird, so dass die ionenadsorbierende Elektrode (E1) als Anode dient, damit das elektrisch leitende Material (C1) wenigstens eine Art von in den Ionen (L) enthaltenen Anionen (L⁻) adsorbieren kann, und
in Schritt (II) eine Spannung zwischen der ionenadsorbierenden Elektrode (E1) und der Gegenelektrode angelegt wird, so dass die ionenadsorbierende Elektrode (E1) als Kathode dient, damit das Anion (L⁻), das von dem elektrisch leitenden Material (C1) adsorbiert wurde, in die Flüssigkeit freigesetzt werden kann und damit an der Gegenelektrode ein Wasserstoffion erzeugt werden kann, wodurch der pH-Wert der Flüssigkeit sinkt.

4. Verfahren zur Anpassung des pH-Werts nach Anspruch 1, wobei
in Schritt (I) eine Spannung zwischen der ionenadsorbierenden Elektrode (E1) und der Gegenelektrode angelegt wird, so dass die ionenadsorbierende Elektrode (E1) als Kathode dient, damit das elektrisch leitende Material (C1) wenigstens eine Art von in den Ionen (L) enthaltenen Kationen (L⁺) adsorbieren kann, und
in Schritt (II) eine Spannung zwischen der ionenadsorbierenden Elektrode (E1) und der Gegenelektrode angelegt wird, so dass die ionenadsorbierende Elektrode (E1) als Anode dient, damit das Kation (L⁺), das von dem elektrisch leitenden Material (C1) adsorbiert wurde, in die Flüssigkeit freigesetzt werden kann und damit an der Gegenelektrode ein Hydroxidion erzeugt werden kann, wodurch der pH-Wert der Flüssigkeit steigt.

5. Vorrichtung zum Einstellen des pH-Werts, umfassend:
einen Behälter,
eine ionenadsorbierende Elektrode (E1), die ein elektrisch leitendes Material (C1) enthält, das Aktivkohle enthält und dazu in der Lage ist, ein Ion zu adsorbieren,
eine Gegenelektrode,
ein Mittel zum Anlegen einer Spannung und
eine Steuerung,
wobei die Gegenelektrode (13, 14) eine Metallelektrode oder eine Graphitelektrode ist und
die Steuerung einen Arithmetik-Prozessor und eine Speichereinheit aufweist, und wobei in der Speichereinheit gespeichert ist:
- ein Programm zum Durchführen aller Schritte eines Verfahrens nach einem der Ansprüche 1 bis 4 und
- ein Ziel-pH-Wert.

6. Vorrichtung zur Anpassung des pH-Werts nach Anspruch 5, wobei die Gegenelektrode eine Metallelektrode ist.

## Revendications

1. Procédé pour ajuster le pH d'un liquide (30) contenant de l'eau, comprenant :
(I) l'application d'une tension entre une contre-électrode (13, 14) et une électrode adsorbant les ions (E1, 11, 12) contenant un matériau électriquement conducteur (C1) qui contient du carbone activé et qui est capable d'adsorber un ion, dans une solution aqueuse (A) contenant au moins un type d'ions (L) différents d'un ion hydrogène et d'un ion hydroxyde, pour permettre au carbone activé d'adsorber au moins une partie des ions (L), et
**(II)** l'application d'une tension entre l'électrode adsorbant les ions (E1, 11, 12) et la contre-électrode (13, 14) dans le liquide (30) pour permettre aux ions (L) adsorbés par le carbone activé d'être libérés dans le liquide (30) et pour permettre à un ion hydrogène ou un ion hydroxyde d'être formé au niveau de la contre-électrode,
où la contre-électrode (13, 14) est une électrode métallique ou une électrode en graphite.

2. Procédé pour ajuster le pH selon la revendication 1, où le liquide utilisé dans l'étape (II) est différent de la solution aqueuse (A) traitée dans l'étape (I).

3. Procédé pour ajuster le pH selon la revendication 1, où dans l'étape (I), une tension est appliquée entre l'électrode adsorbant les ions (E1) et la contre-électrode de sorte que l'électrode adsorbant les ions (E1) sert d'anode, pour permettre au matériau électriquement conducteur (C1) d'adsorber au moins un type d'anions (L⁻) contenus dans les ions (L), et
dans l'étape (II), une tension est appliquée entre l'électrode adsorbant les ions (E1) et la contre-électrode de sorte que l'électrode adsorbant les ions (E1) sert de cathode, pour permettre à l'anion (L⁻) qui a été adsorbé par le matériau électriquement conducteur (C1) d'être libéré dans le liquide et pour permettre à un ion hydrogène d'être formé au niveau de la contre-électrode, ce qui conduit à une diminution du pH du liquide.

4. Procédé pour ajuster le pH selon la revendication 1, où dans l'étape (I), une tension est appliquée entre l'électrode adsorbant les ions (E1) et la contre-électrode de sorte que l'électrode adsorbant les ions (E1) sert de cathode, pour permettre au matériau électriquement conducteur (C1) d'adsorber au moins un type de cations (L⁺) contenus dans les ions (L), et
dans l'étape (II), une tension est appliquée entre l'électrode adsorbant les ions (E1) et la contre-électrode de sorte que l'électrode adsorbant les ions (E1) sert d'anode, pour permettre au cation (L⁺) qui a été adsorbé par le matériau électriquement conducteur (C1) d'être libéré dans le liquide et pour permettre à un ion hydroxyde d'être formé au niveau de la contre-électrode, ce qui conduit à une augmentation du pH du liquide.

5. Appareil pour ajuster le pH comprenant :
un récipient ;
une électrode adsorbant les ions (E1) contenant un matériau électriquement conducteur (C1) qui contient du carbone activé et qui est capable d'adsorber un ion ;
une contre-électrode,
un moyen d'application de tension, et
un organe de commande,
où la contre-électrode (13, 14) est une électrode métallique ou une électrode en graphite et
l'organe de commande inclut une unité de traitement arithmétique et une unité de mémoire, et où, dans l'unité de mémoire sont enregistrés :
- un programme pour réaliser chaque étape d'un procédé selon l'une quelconque des revendications 1 à 4 et
- une valeur de pH cible.

6. Appareil pour ajuster le pH selon la revendication 5, où la contre-électrode est une électrode métallique.
